# EUROPÄISCHE PATENTSCHRIFT

(11) **EP 3 715 538 B1**
(45) Veröffentlichungstag und Bekanntmachung des Hinweises auf die Patenterteilung: **30.04.2025**
(21) Anmeldenummer: 20161213.2
(22) Anmeldetag: 05.03.2020
(51) Int. Cl.: E03B 7/07, F16L 55/05

(54) **VERFAHREN UND VORRICHTUNG ZUM ABBAUEN EINES RESTDRUCKES IN EINER FLUIDLEITUNG**
METHOD AND DEVICE FOR REDUCING RESIDUAL PRESSURE IN A FLUID LINE
PROCÉDÉ ET DISPOSITIF DE RELÂCHEMENT D'UNE PRESSION RÉSIDUELLE DANS UNE CONDUITE DE FLUIDE

(30) Priorität: 29.03.2019 DE 102019002244
(43) Veröffentlichungstag der Anmeldung: 30.09.2020
(73) Patentinhaber: Grohe AG, 58653 Hemer (DE)
(72) Erfinder: MAY, Sascha, 44879 Bochum (DE); HEUBROCK, Dominik, 59387 Ascheberg (DE); FLÜGGE, Simon, 44263 Dortmund (DE); SCHRÖDER, Claudia, 58642 Iserlohn (DE); BENSING, Mirja, 44379 Dortmund (DE)

(56) Entgegenhaltungen:
- EP-A1- 3 064 813
- DE-C- 36 455
- FR-A1- 2 611 023
- US-B1- 6 847 782

## Beschreibung

Die Erfindung betrifft ein Verfahren und eine Vorrichtung zum Abbauen eines in einer Fluidleitung verbleibenden Restdruckes. Die Fluidleitung ist Teil eines Brausesystems. Das durch die Fluidleitung geleitete Fluid ist insbesondere Wasser (z. B. Leitungswasser).

Bei dem Betrieb von Sanitärarmaturen, Duschen bzw. Sanitärsystemen wird Wasser durch eine Fluidleitung hin zu einer Armatur (Wasserhahn/Duschkopf, etc.) geleitet, aus der das Wasser an eine Umgebung (in einen Behälter, z. B. Waschtisch, Duschtasse, WC-Becken, Badewanne) ausströmt. Dabei weist die Fluidleitung regelmäßig einen verschließbaren Zulauf und einen Ablauf auf.

Das Dokument FR 2611023 A1 offenbart ein Anti-Wasserschlaggerät an einer Wasserleitung, um den Wasserdruck in der Wasserleitung zu senken.

Das Dokument DE 36455 C offenbart eine Vorrichtung zur Vermeidung der hydraulischen Stöße in der Wasserleitung beim Schließen von Auslaufhähnen.

Bei dem Verschließen des Zulaufs kann in der Fluidleitung, insbesondere zwischen Zulauf und Ablauf bzw. Armatur, ein Restdruck vorliegen. Dieser Restdruck kann insbesondere dazu führen, dass Einrichtungen zum Verhindern eines Nachtropfens nicht wie vorgesehen funktionieren.

Aufgabe der vorliegenden Erfindung ist es, die mit Bezug auf den Stand der Technik angeführten Probleme zumindest teilweise zu lösen. Insbesondere sollen ein Verfahren und eine Vorrichtung zum Abbauen eines in einer Fluidleitung verbleibenden Restdruckes vorgeschlagen werden, so dass insbesondere Einrichtungen zum Verhindern eines Nachtropfens wie vorgesehen funktionieren können.

Zur Lösung dieser Aufgaben trägt ein Verfahren mit den Merkmalen gemäß Patentanspruch 1 sowie eine Vorrichtung mit den Merkmalen gemäß Patentanspruch 5 bei. Vorteilhafte Weiterbildungen sind Gegenstand der abhängigen Patentansprüche.

Es wird ein Verfahren zum Abbauen eines in einer Fluidleitung eines Brausesystems verbleibenden Restdruckes gemäß Anspruch 1 vorgeschlagen.

Die Fluidleitung ist Teil eines Brausesystems. Das durch die Fluidleitung geleitete Fluid ist insbesondere Wasser (z. B. Leitungswasser).

Bei dem Betrieb von Sanitärarmaturen, Duschen bzw. Sanitärsystemen wird Wasser durch eine Fluidleitung hin zu einer Armatur (Wasserhahn/Duschkopf, etc.) geleitet, aus der das Wasser über den Ablauf an eine Umgebung (in einen Behälter, z. B. Waschtisch, Duschtasse, WC-Becken, Badewanne) ausströmt. Dabei weist die Fluidleitung regelmäßig einen verschließbaren Zulauf und den Ablauf auf. Eine verschließbare Ausströmöffnung kann stromaufwärts (relativ zur Strömungsrichtung des bei offenem Zulauf in der Fluidleitung strömenden Fluids) eines Ablaufs der Armatur angeordnet sein, wobei das Fluid die Armatur über den Ablauf hin zu einer Umgebung verlässt. Die verschließbare Ausströmöffnung kann z. B. eine Einrichtung zum Verhindern eines Nachtropfens sein.

Das Fluid strömt insbesondere nur dann von Zulauf zum Ablauf, wenn der Zulauf geöffnet ist. Sobald der Zulauf verschlossen ist, steht das Fluid und der Restdruck baut sich zwischen Zulauf und Ablauf zumindest im Bereich der Öffnung auf.

Der Restdruck in der Fluidleitung ist insbesondere ein Überdruck gegenüber der Umgebung (Atmosphäre). Der Restdruck liegt bei stehendem Fluid bzw. geschlossenem Zulauf insbesondere in der Fluidleitung zumindest im Bereich der Öffnung vor.

Insbesondere erfolgt in Schritt b) des Verfahrens nach Anspruch 1 ein Abbau des Restdruckes in der Fluidleitung durch Abströmen des Fluids aus der Fluidleitung über die Öffnung in das Zusatzvolumen.

Insbesondere wird in Schritt d) durch das in der Fluidleitung strömende Fluid das in dem Zusatzvolumen befindliche Fluid über die Öffnung angesaugt und sukzessive aus dem Zusatzvolumen zurück in die Fluidleitung abgeführt.

Insbesondere erfolgt die Ansaugung durch einen, in der Fluidleitung von dem in der Fluidleitung strömenden Fluid in einer zweiten Einrichtung erzeugten, Unterdruck. Der Unterdruck ist insbesondere geringer als ein Druck der Umgebung (Atmosphäre). Der Unterdruck wird insbesondere in einer zweiten Einrichtung erzeugt.

Insbesondere umfasst die zweite Einrichtung eine Venturi-Düse oder eine Wirbelkammer.

Eine Venturi-Düse ist allgemein bekannt. Der durch die Strömung eines Fluids durch die Venturi-Düse erzeugte Unterdruck wird hier zur Ansaugung des Fluids aus dem Zusatzvolumen eingesetzt.

Eine Wirbelkammer ist z. B. aus DE 20 2005 010 236 U1 und EP 0 213 329 A2 bekannt. Dabei wird ein Fluid z. B. tangential in eine Kammer eingespritzt, so dass sich in der Kammer Verwirbelungen und lokal ein Unterdruck bildet. Im Bereich des Unterdruckes können Zuleitungen für Medien angeordnet werden, so dass durch die Strömung des Fluids das Medium in die Kammer eingesaugt und mit Fluid vermischt wird.

Vorliegend wird unter Wirbelkammer jede Strömungseinrichtung subsummiert, in der durch die Strömung eines Fluids (lokal festgelegte) Bereiche mit einem Unterdruck erzeugbar sind. In diesen Bereichen ist die vorstehend beschriebene Öffnung angeordnet, so dass infolge des Unterdruckes in der Fluidleitung bzw. in der Wirbelkammer das Fluid aus dem Zusatzvolumen angesaugt werden kann.

Insbesondere verändert (vergrößert und verkleinert) sich das Zusatzvolumen in Abhängigkeit von dem in dem Zusatzvolumen befindlichen Fluid bzw. von der Menge des in dem Zusatzvolumen befindlichen Fluids.

Insbesondere umfasst die erste Einrichtung einen kraftlos befüllbaren und entleerbaren Raum (das Zusatzvolumen). Dieser Raum ist durch eine verformbare Folie gebildet, die an der Fluidleitung angeordnet ist. Der Raum wird durch das über die Öffnung einströmende Fluid vergrößert und verkleinert sich sukzessive mit dem Abströmen des Fluids aus dem Zusatzvolumen über die Öffnung zurück in die Fluidleitung, Insbesondere ist die Fluidleitung Teil einer Sanitäranlage und das Fluid Wasser.

Insbesondere bildet die Fluidleitung einen Zulaufbereich einer Brause (z. B. ist die Fluidleitung als Rohr, Schlauch oder Wasserführung ausgeführt).

Es wird weiter eine Vorrichtung zum Abbauen eines in einer Fluidleitung eines Brausesystems verbleibenden Restdruckes gemäß Anspruch 5 vorgeschlagen. Insbesondere ist die Vorrichtung zur Durchführung des bereits beschriebenen Verfahrens geeignet ausgeführt bzw. kann die Vorrichtung durch das Verfahren betrieben werden.

Insbesondere erzeugt die zweite Einrichtung, bei entlang der Fluidleitung und durch die Einrichtung strömenden Fluid, einen Unterdruck in der Fluidleitung, so dass Fluid aus dem Zusatzvolumen in die Fluidleitung ansaugbar ist.

Insbesondere umfasst die zweite Einrichtung eine Venturi-Düse oder eine Wirbelkammer.

Insbesondere verändert (vergrößert und verkleinert) sich das Zusatzvolumen in Abhängigkeit von dem in dem Zusatzvolumen befindlichen Fluid bzw. von der Menge des in dem Zusatzvolumen befindlichen Fluids.

Insbesondere weist das Zusatzvolumen ein größtes Volumen von höchstens 0,5 Litern, bevorzugt von höchstens 0,2 Litern, besonders bevorzugt von höchstens 0,1 Litern, auf.

Insbesondere beträgt der Überdruck gegenüber der Umgebung (Atmosphäre) höchstens 0,5 bar, bevorzugt höchstens 0,2 bar, besonders bevorzugt höchstens 0,1 bar.

Insbesondere wird durch die Befüllung des Zusatzvolumens ein Überdruck in der Fluidleitung um mindestens 0,1 bar abgebaut, bevorzugt um mindestens 0,2 bar.

Insbesondere wird durch die Befüllung des Zusatzvolumens ein Überdruck in der Fluidleitung um höchstens 1,0 bar abgebaut, bevorzugt um höchstens 0,75 bar, besonders bevorzugt um höchstens 0,5 bar.

Die Ausführungen zu dem Verfahren sind insbesondere auf die Vorrichtung übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder einen Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll.

Insbesondere ist darauf hinzuweisen, dass die Figuren und insbesondere die dargestellten Größenverhältnisse nur schematisch sind. Es zeigen:
- Fig. 1:: eine Vorrichtung in einem durchströmten Zustand bzw. Schritt d) des Verfahrens; und
- Fig. 2:: die Vorrichtung nach Fig. 1 bei stehendem Fluid bzw. Schritt b) des Verfahrens.

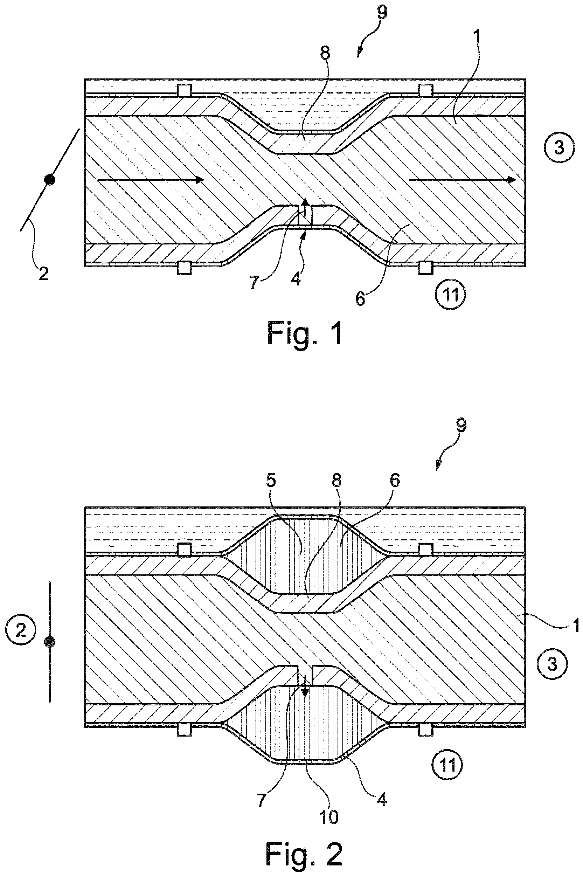

Die Fig. 1 zeigt eine Vorrichtung 9 in einem durchströmten Zustand bzw. Schritt d) des Verfahrens. Fig. 2 zeigt die Vorrichtung 9 nach Fig. 1 bei stehendem Fluid 6 bzw. Schritt b) des Verfahrens. Die Fig. 1 und 2 werden im Folgenden gemeinsam beschrieben.

Die Vorrichtung 9 umfasst eine Fluidleitung 1 mit einem verschließbaren Zulauf 2 und einem Ablauf 3 sowie eine stromabwärts des Zulaufs 2 und zwischen Zulauf und Ablauf 3 angeordnete erste Einrichtung 4 zur Bereitstellung eines Zusatzvolumens 5 für ein durch die Fluidleitung 1 strömendes Fluid 6. Das Zusatzvolumen 5 ist über eine Öffnung 7 mit der Fluidleitung 1 fluidtechnisch verbunden. In der Fluidleitung 1 ist eine zweite Einrichtung 8 zur Ansaugung des in dem Zusatzvolumen 5 befindlichen Fluids 6 zurück in die Fluidleitung 1 angeordnet.

Die zweite Einrichtung 8 erzeugt, bei offenem Zulauf 2 und bei entlang der Fluidleitung 1 und durch die zweite Einrichtung 8 strömenden Fluid 6 (siehe Fig. 1), einen Unterdruck in der Fluidleitung 1, so dass Fluid 6 aus dem Zusatzvolumen 5 in die Fluidleitung 1 ansaugbar ist.

Bei geschlossenem Zulauf 3 und stehendem Fluid 6 bildet sich zwischen Zulauf 2 und Ablauf 3 ein Überdruck in der Fluidleitung 1 gegenüber der Umgebung 11 aus, so dass Fluid 6 aus der Fluidleitung 1 über die Öffnung 7 in die erste Einrichtung 4 abströmt und das Zusatzvolumen 5 bildet bzw. füllt (siehe Fig. 2).

Die zweite Einrichtung 8 umfasst hier eine Venturi-Düse.

Das Zusatzvolumen 5 verändert (vergrößert und verkleinert) sich in Abhängigkeit von dem in dem Zusatzvolumen 5 befindlichen Fluid 6 bzw. von der Menge des in dem Zusatzvolumen 4 befindlichen Fluids 6.

Die erste Einrichtung 4 umfasst einen kraftlos befüllbaren und entleerbaren Raum (das Zusatzvolumen 5). Dieser Raum wird durch eine verformbare Folie bzw. Wandung 10 gebildet, die an der Fluidleitung 1 angeordnet ist. Der Raum wird durch das über die Öffnung 7 einströmende Fluid 6 vergrößert und verkleinert sich sukzessive mit dem Abströmen des Fluids 6 aus dem Zusatzvolumen 5 über die Öffnung 7 zurück in die Fluidleitung 1.

### Bezugszeichenliste

- 1: Fluidleitung
- 2: Zulauf
- 3: Ablauf
- 4: erste Einrichtung
- 5: Zusatzvolumen
- 6: Fluid
- 7: Öffnung
- 8: zweite Einrichtung
- 9: Vorrichtung
- 10: Wandung

## Patentansprüche

1. Verfahren zum Abbauen eines in einer Fluidleitung (1) eines Brausesystems verbleibenden Restdruckes nach dem Schließen eines verschließbaren Zulaufs (2) der Fluidleitung (1), wobei die Fluidleitung (1) den verschließbaren Zulauf (2) und einen Ablauf (3) aufweist, wobei zwischen dem verschließbaren Zulauf (2) und dem Ablauf (3) eine erste Einrichtung (4) zur Bereitstellung eines Zusatzvolumens (5) für ein durch die Fluidleitung (1) strömendes Fluid (6) angeordnet ist; wobei das Zusatzvolumen (5) sich in Abhängigkeit von dem in dem Zusatzvolumen (5) befindlichen Fluid (6) vergrößert und verkleinert; wobei das Zusatzvolumen (5) durch eine verformbare Folie (10) gebildet ist, die an der Fluidleitung (1) angeordnet ist und bei vollständiger Entleerung des Zusatzvolumens (5) direkt an der Fluidleitung (1) anliegt; wobei das Zusatzvolumen (5) über eine Öffnung (7) mit der Fluidleitung (1) fluidtechnisch verbunden ist; wobei das Zusatzvolumen (5) durch das über die Öffnung (7) einströmende Fluid (6) vergrößert wird und sich sukzessive verkleinert mit dem Abströmen des Fluids (6) aus dem Zusatzvolumen (5) über die Öffnung (7) zurück in die Fluidleitung (1), wobei das Verfahren ausgehend von dem verschließbaren Zulauf (2) in dessen offenem Zustand und einem strömenden Fluid (6) zumindest die folgenden Schritte umfasst:
a) Schließen des verschließbaren Zulaufs (2);
b) Abbauen des Restdruckes in der Fluidleitung (1) durch Abströmen von Fluid (6) aus der Fluidleitung (1) in das Zusatzvolumen (5);
c) Öffnen des verschließbaren Zulaufs (2), so dass Fluid (6) vom verschließbaren Zulauf (2) zum Ablauf (3) strömt;
d) Ansaugen des in dem Zusatzvolumen (5) befindlichen Fluids (6) über die Öffnung (7) in die Fluidleitung (1) durch das in der Fluidleitung (1) strömende Fluid (6).

2. Verfahren nach Patentanspruch 1, wobei die Ansaugung durch einen, in der Fluidleitung (1) von dem in der Fluidleitung (1) strömenden Fluid (6) in einer zweiten Einrichtung (8) erzeugten, Unterdruck erfolgt.

3. Verfahren nach Patentanspruch 2, wobei die zweite Einrichtung (8) eine Venturi-Düse oder eine Wirbelkammer ist.

4. Verfahren nach einem der vorhergehenden Patentansprüche, wobei die Fluidleitung (1) Teil einer Sanitäranlage und das Fluid (6) Wasser ist.

5. Vorrichtung (9) zum Abbauen eines in einer Fluidleitung (1) verbleibenden Restdruckes nach dem Schließen eines verschließbaren Zulaufs (2) der Fluidleitung (1), zumindest umfassend eine Fluidleitung (1) mit dem verschließbaren Zulauf (2) und einem Ablauf (3) sowie einer zwischen dem verschließbaren Zulauf (2) und dem Ablauf (3) angeordneten ersten Einrichtung (4) zur Bereitstellung eines Zusatzvolumens (5) für ein durch die Fluidleitung (1) strömendes Fluid (6); wobei das Zusatzvolumen (5) sich in Abhängigkeit von dem in dem Zusatzvolumen (5) befindlichen Fluid (6) vergrößert und verkleinert; wobei das Zusatzvolumen (5) durch eine verformbare Folie (10) gebildet ist, wobei das Zusatzvolumen (5) über eine Öffnung (7) mit der Fluidleitung (1) fluidtechnisch verbunden ist; wobei das Zusatzvolumen (5) dazu eingerichtet ist, sich durch das über die Öffnung (7) einströmende Fluid (6) zu vergrößern und sich sukzessive zu verkleinern mit dem Abströmen des Fluids (6) aus dem Zusatzvolumen (5) über die Öffnung (7) zurück in die Fluidleitung (1), wobei in der Fluidleitung (1) eine zweite Einrichtung (8) zur Ansaugung des in dem Zusatzvolumen (5) befindlichen Fluids (6) zurück in die Fluidleitung (1) angeordnet ist, **dadurch gekennzeichnet,dass**
die Fluidleitung (1) Teil eines Brausesystems ist und
die Folie (10) an der Fluidleitung (1) angeordnet ist und bei vollständiger Entleerung des Zusatzvolumens (5) direkt an der Fluidleitung (1) anliegt.

6. Vorrichtung (9) nach Patentanspruch 5, wobei die zweite Einrichtung (8) bei entlang der Fluidleitung (1) und durch die zweite Einrichtung (8) strömenden Fluid (6) einen Unterdruck in der Fluidleitung (1) erzeugt, so dass Fluid (6) aus dem Zusatzvolumen (5) in die Fluidleitung (1) ansaugbar ist.

7. Vorrichtung (9) nach Patentanspruch 6, wobei die zweite Einrichtung (8) eine Venturi-Düse oder eine Wirbelkammer umfasst.

8. Vorrichtung (9) nach einem der vorhergehenden Patentansprüche, wobei das Zusatzvolumen (5) ein größtes Volumen von höchstens 0,5 Litern aufweist.

## Claims

1. A method for reducing a residual pressure remaining in a fluid line (1) of a shower system after the closing of a closable inflow point (2) of the fluid line (1), wherein the fluid line (1) includes the closable inflow point (2) and an outflow point (3), wherein a first mechanism (4) for providing an additional volume (5) for a fluid (6) flowing through the fluid line (1) is arranged between the closable inflow point (2) and the outflow point (3); wherein the additional volume (5) increases and decreases as a function of the fluid (6) present in the additional volume (5); wherein the additional volume (5) is formed by a deformable foil (10) which is arranged on the fluid line (1) and rests directly against the fluid line (1) when the additional volume (5) is completely emptied; wherein the additional volume (5) is fluidically connected to the fluid line (1) via an opening (7); wherein the additional volume (5) is increased by the fluid (6) flowing in via the opening (7) and successively decreases as the fluid (6) flows out of the additional volume (5) via the opening (7) and back into the fluid line (1), wherein the method comprises at least the following steps, based on the closable inflow point (2) in its open state and a flowing fluid (6):
a) closing the closable inflow point (2);
b) reducing the residual pressure in the fluid line (1) by letting the fluid (6) flow from the fluid line (1) into the additional volume (5);
c) opening the closable inflow point (2) so that fluid (6) flows from the closable inflow point (2) to the outflow point (3);
d) sucking, via the opening (7), the fluid (6) present in the additional volume (5) into the fluid line (1) by means of the fluid (6) flowing in the fluid line (1).

2. The method according to claim 1, wherein the suction is effected by a negative pressure generated in a second mechanism (8) in the fluid line (1) by the fluid (6) flowing in the fluid line (1).

3. The method according to claim 2, wherein the second mechanism (8) is a Venturi nozzle or a vortex chamber.

4. The method according to any one of the preceding claims, wherein the fluid line (1) is part of a sanitary installation and the fluid (6) is water.

5. A device (9) for reducing a residual pressure remaining in a fluid line (1) after the closing of a closable inflow point (2) of the fluid line (1), at least comprising a fluid line (1) with the closable inflow point (2) and an outflow point (3) as well as a first mechanism (4) arranged between the closable inflow point (2) and the outflow point (3) for providing an additional volume (5) for a fluid (6) flowing through the fluid line (1); wherein the additional volume (5) increases and decreases as a function of the fluid (6) present in the additional volume (5); wherein the additional volume (5) is formed by a deformable foil (10), wherein the additional volume (5) is fluidically connected to the fluid line (1) via an opening (7); wherein the additional volume (5) is configured to increase by the fluid (6) flowing in via the opening (7) and to be successively decrease as the fluid (6) flows out of the additional volume (5) via the opening (7) and back into the fluid line (1), wherein a second mechanism (8) for sucking the fluid (6) present in the additional volume (5) back into the fluid line (1) is arranged in the fluid line (1), **characterized in that**
the fluid line (1) is part of a shower system and the foil (10) is arranged on the fluid line (1) and rests directly against the fluid line (1) when the additional volume (5) is completely emptied.

6. The device (9) according to claim 5, wherein the second mechanism (8) generates a negative pressure in the fluid line (1) as fluid (6) flows along the fluid line (1) and through the second mechanism (8) so that fluid (6) from the additional volume (5) can be sucked into the fluid line (1).

7. The device (9) according to claim 6, wherein the second mechanism (8) comprises a Venturi nozzle or a vortex chamber.

8. The device (9) according to any one of the preceding claims, wherein the additional volume (5) has a maximum volume of at most 0.5 liters.

## Revendications

1. Procédé, destiné à relâcher une pression résiduelle persistant dans une conduite à fluide (1) d'un système de douche après la fermeture d'une arrivée (2) fermable de la conduite à fluide (1), la conduite à fluide (1) comportant l'arrivée (2) fermable et une évacuation (3), entre l'arrivée (2) fermable et l'évacuation (3) étant placé un premier système (4) destiné à mettre à disposition un volume additionnel (5) pour un fluide (6) circulant à travers la conduite à fluide (1) ; le volume additionnel (5) augmentant et diminuant en fonction du fluide (6) qui se trouve dans le volume additionnel (5) ; le volume additionnel (5) étant constitué d'un film (10) déformable, qui est placé sur la conduite à fluide (1) et qui lors d'un vidage complet du volume additionnel (5) est directement appliqué sur la conduite à fluide (1) ; le volume additionnel (5) étant fluidiquement relié par l'intermédiaire d'une ouverture (7) avec la conduite à fluide (1) ; le volume additionnel (5) étant augmenté par le fluide (6) affluant à travers l'ouverture (7) et diminuant successivement avec l'écoulement du fluide (6) hors du volume additionnel (5) par l'intermédiaire de l'ouverture (7), en retour dans la conduite à fluide (1), en partant de l'arrivée (2) fermable dans sa position ouverte et d'un fluide (6) circulant, le procédé comprenant au moins les étapes suivantes, consistant dans :
a) la fermeture de l'arrivée (2) fermable ;
b) le relâchement de la pression résiduelle dans la conduite à fluide (1) par écoulement de fluide (6) hors de la conduite à fluide (1) dans le volume additionnel (5) ;
c) l'ouverture de l'arrivée (2) fermable, de sorte que le fluide (6) circule de l'arrivée (2) fermable vers l'évacuation (3) ;
d) l'aspiration du fluide (6) se trouvant dans le volume additionnel (5) par l'intermédiaire de l'ouverture (7) dans la conduite à fluide (1) par le fluide circulant dans la conduite à fluide (1).

2. Procédé selon la revendication 1 du brevet, l'aspiration s'effectuant par une dépression générée dans la conduite à fluide (1) dans un deuxième système (8) par le fluide (6) circulant dans la conduite à fluide (1).

3. Procédé selon la revendication 2 du brevet, le deuxième système (8) étant une buse Venturi ou une chambre de turbulence.

4. Procédé selon l'une quelconque des revendications précédentes du brevet, la conduite à fluide (1) étant une partie d'une installation sanitaire et le fluide (6) étant de l'eau.

5. Dispositif (9), destiné à relâcher une pression résiduelle persistant dans une conduite à fluide (1) après la fermeture d'une arrivée (2) fermable de la conduite à fluide (1), comprenant au moins une conduite à fluide (1) pourvue de l'arrivée (2) fermable et d'une évacuation (3), ainsi que d'un premier système (4) placé entre l'arrivée (2) fermable et l'évacuation (3), destiné à mettre à disposition un volume additionnel (5) pour un fluide (6) circulant à travers la conduite à fluide (1) ; le volume additionnel (5) augmentant ou diminuant en fonction du fluide (6) qui se trouve dans le volume additionnel (5) ; le volume additionnel (5) étant constitué d'un film (10) déformable, le volume additionnel (5) étant fluidiquement relié par l'intermédiaire d'une ouverture (7) avec la conduite à fluide (1) ; le volume additionnel (5) étant configuré pour augmenter par l'intermédiaire du fluide (6) affluant par l'intermédiaire de l'ouverture (7) et pour diminuer successivement avec l'écoulement du fluide (6) hors du volume additionnel (5) par l'intermédiaire de l'ouverture (7), en retour dans la conduite à fluide (1), dans la conduite à fluide (1) étant placé un deuxième système (8), destiné à aspirer le fluide (6) qui se trouve dans le volume additionnel (5) en retour dans la conduite à fluide (1), **caractérisé en ce que** la conduite à fluide (1) est une partie d'un système de douche et le film (10) est placé sur la conduite à fluide (1) et lors d'un vidage complet du volume additionnel (5) est directement appliqué sur la conduite à fluide (1).

6. Dispositif (9) selon la revendication 5 du brevet, lorsque du fluide (6) circule le long de la conduite à fluide (1) et à travers le deuxième système (8), le deuxième système (8) générant une dépression dans la conduite à fluide (1), de sorte que le fluide (6) puisse être aspiré hors du volume additionnel (5) dans la conduite à fluide (1).

7. Dispositif (9) selon la revendication 6 du brevet, le deuxième système (8) comprenant une buse Venturi ou une chambre de turbulence.

8. Dispositif (9) selon l'une quelconque des revendications précédentes du brevet, le volume additionnel (5) présentant un volume maximum d'au plus 0,5 litres.
